Europäisches Patentamt

European Patent Office

Office européen des brevets

(19)

(11) Numéro de publication : **0 012 084**
**B1**

# (12) FASCICULE DE BREVET EUROPÉEN

(45) Date de publication du fascicule du brevet :
**19.05.82**

(51) Int. Cl.³ : **B 65 G  7/02**

(21) Numéro de dépôt : **79400933.2**

(22) Date de dépôt : **29.11.79**

(54) **Installation de manutention par table à billes.**

(30) Priorité : **04.12.78 FR 7834102**

(43) Date de publication de la demande :
**11.06.80 (Bulletin 80/12)**

(45) Mention de la délivrance du brevet :
**19.05.82 Bulletin 82/20**

(84) Etats contractants désignés :
**DE NL SE**

(56) Documents cités :
**FR - A - 1 559 673**

(73) Titulaire : **Dussud, Jean-Benoît**
**12, rue Champ Rochas**
**F-38240 Meylan (FR)**

(72) Inventeur : **Dussud, Jean-Benoît**
**12, rue Champ Rochas**
**F-38240 Meylan (FR)**

(74) Mandataire : **Flechner, Willy**
**c/o CABINET FLECHNER 63, Avenue des Champs**
**Elysées**
**F-75008 Paris (FR)**

Imprimerie Jouve, 18, rue St-Denis, 75001 Paris, France

La présente invention concerne des installations pour manutentionner une charge, comprenant une fosse de récupération de billes, qui est adjacente à une surface de roulement sur laquelle des billes de même diamètre roulent librement et qui est délimitée d'une part, par un bord de la surface et d'autre part, par une paroi dont le chant est à un niveau inférieur au plan passant par le sommet des billes roulant sur la surface de roulement, et des dispositifs de renvoi sur la surface des billes qui tombent dans la fosse.

Dans le brevet français 1 559 673, on décrit un couloir à billes libres pour la manutention de charges, alimenté à l'une des extrémités par une trémie à billes, lesquelles tombent à l'autre extrémité dans un réceptable. Une soufflerie, avec séparateur d'élimination du fluide d'entraînement, permet de ramener les billes du réceptacle à la trémie. On ne peut songer à élargir le couloir, parce que son étroitesse conditionne son réapprovisionnement correct en billes à l'aide du système à fosse unique à l'extrémité en aval et à trémie à l'extrémité en amont. Ce couloir ne convient pas pour manipuler une charge large, ni pour la faire tourner de 90° ou pour la déplacer en sens inverse, de la fosse vers la trémie, parce qu'alors les billes, entraînées toutes vers la trémie, font défaut vers la fosse et le couloir est inapte à y recevoir une charge suivante. Le niveau inférieur de la trémie et la largeur de la fosse s'opposent à la mise bout à bout de deux couloirs, de manière à pouvoir manutentionner la charge sur une distance plus longue.

L'invention pallie ces inconvénients par une installation permettant d'avoir une table à billes de grande dimension sur laquelle les billes qui y sont renvoyées viennent s'éparpiller au hasard.

L'invention a donc pour objet une installation pour manutentionner une charge, comprenant une fosse de récupération de billes, qui est adjacente à une surface de roulement sur laquelle des billes de même diamètre roulent librement et qui est délimitée d'une part, par un bord de la surface et d'autre part, par une paroi dont le chant est à un niveau inférieur au plan passant par le sommet des billes roulant sur la surface de roulement, et des dispositifs de renvoi sur la surface des billes qui tombent dans la fosse, caractérisée en ce que la fosse s'étend sur au moins deux bords de la surface de roulement qui forme une table, et il est prévu un répartiteur entre les dispositifs de renvoi des billes qui tombent dans la fosse.

Grâce à ce répartiteur, il n'y a pas de zone de la table de moins en moins pourvue de billes au fur et à mesure que l'installation fonctionne et que des billes tombent dans la fosse par un côté de la table.

La répartition est d'autant meilleure que la table est carrée et est entourée par la fosse, et qu'il y a autant de dispositifs de renvoi que de côtés de la table, donc quatre dispositifs de renvoi, un pour chaque bord.

Suivant un mode de réalisation simple et pratique, le répartiteur est une pyramide à sommet dirigé vers le haut et dont le prolongement de l'axe passe par le point d'intersection des diagonales de la table.

Comme la fosse s'étend en dessous du plan dans lequel s'étend l'objet à manutentionner et comme la cheminée de renvoi des billes peut, elle aussi, ne pas faire obstacle au déplacement de l'objet, il est possible de monter côte à côte plusieurs installations suivant l'invention pour former une installation de manutention sur de longues distances, d'autant mieux que la largeur, décomptée suivant le plan de la table, de la fosse et d'un dispositif de renvoi des billes est de peu supérieure à deux fois le diamètre des billes.

Aux dessins annexés, donnés uniquement à titre d'exemple :

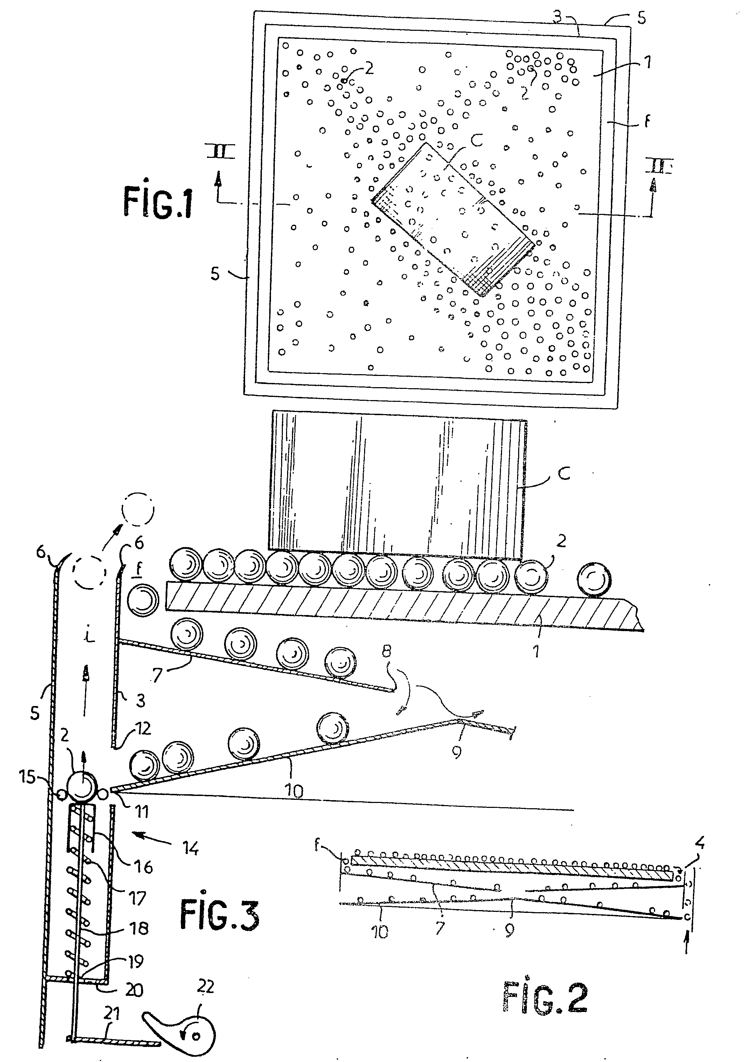

La figure 1 est une vue de dessus d'un élément de manutention suivant l'invention.

La figure 2 est une vue en coupe suivant la ligne II-II de la figure 1, et

La figure 3 est une vue en coupe d'un bord de la table suivant l'invention.

Pour transporter une charge C et en changer la direction d'avancement, il est prévu une table 1 carrée, plane, horizontale en tôle dure, sur laquelle roule un lit de billes 2 en acier de même diamètre.

A une distance du pourtour de la table juste supérieure au diamètre des billes 2, sont montées fixes à un bâti non représenté quatre parois 3 capitonnées des deux côtés pour éviter le bruit. Les chants 4 supérieurs de ces parois 3 sont à un niveau inférieur aux sommets des billes 2 et supérieur à la surface de roulement définie par la table 1. Elles forment une fosse f avec les côtés de la table 1. A une distance de ces parois 3, juste supérieure au diamètre des billes, sont montées quatre parois 5 capitonnées du côté tourné vers les parois 3. Les chants supérieurs des parois 3 et 5 sont au même niveau et sont terminés par un déflecteur 6.

Des parois 3, à un niveau inférieur à celui de la face inférieure de la table 1, part un tronc de cône 7 creux de roulement dont la petite base 8, qui est tournée vers le bas et qui est de plus grande dimension que le diamètre d'une bille 2, débouche au-dessus du sommet 9 d'une pyramide 10. Le sommet 9 est tourné vers le haut et le prolongement de l'axe de la pyramide 10 passe par le point d'intersection des diagonales de la table 1. La pyramide 10 est fixée au bâti.

La grande base 11 de la pyramide 10 s'étend jusqu'à quatre ouvertures 12, de plus grande dimension que les billes 2, ménagées dans le bas des parois 3. Les ouvertures 12 débouchent dans la cheminée i, formé entre les parois 3 et 5.

Au bas de chaque intervalle i est prévue respectivement une catapulte 14, semblable à celle des jeux dits « à flipper ». La catapulte comprend essentiellement deux butées 15 déterminant la position d'une bille 2 à catapulter, un poussoir 16 pouvant passer entre les deux butées 15 et coiffant un ressort 17 enroulé en spirale autour de la tige 18 du poussoir. L'extrémité 19 du ressort 17 opposée aux butées 15 s'appuie sur le fond 20 et est coudée en un doigt 21 mû par une came 22, de manière à comprimer le ressort 17 puis à le détendre.

La bille 2 catapultée par la catapulte 14 s'élève dans la cheminée i et, déviée par le déflecteur 6, revient sur la table 1.

## Revendications

1. Installation pour manutentionner une charge (c), comprenant une fosse (f) de récupération de billes (2), qui est adjacente à une surface (1) de roulement sur laquelle des billes (2) de même diamètre roulent librement et qui est délimitée d'une part, par un bord de la surface (1) et d'autre part, par une paroi (3) dont le chant (4) est à un niveau inférieur au plan passant par le sommet des billes (2) roulant sur la surface (1) de roulement, et des dispositifs (12 à 22) de renvoi sur la surface (1) des billes (2) qui tombent dans la fosse (f), caractérisé en ce que la fosse (f) s'étend sur au moins deux bords de la surface (1) de roulement qui forme une table, et il est prévu un répartiteur (8 à 10) entre les dispositifs (12 à 22) de renvoi des billes (2) qui tombent dans la fosse.

2. Installation suivant la revendication 1, caractérisée en ce que le répartiteur (8 à 10) est sous la table (1).

3. Installation suivant la revendication 1 ou 2, caractérisée en ce que la table (1) est bordée sur tout le pourtour par la fosse (f).

4. Installation suivant la revendication 1, 2 ou 3, caractérisée en ce que le répartiteur comprend une pyramide (10) à sommet (9) dirigé vers le haut et dont le prolongement de l'axe passe par le point d'intersection des diagonales de la table (1).

5. Installation suivant la revendication 4, caractérisée en ce que la table (1) est carrée et qu'il y a quatre dispositifs (12 à 22) de renvoi, un pour chaque bord.

6. Installation suivant la revendication 5, caractérisée en ce que les dispositifs de renvoi (12 à 22) sont adjacents à la base de la pyramide (10).

7. Installation suivant l'une des revendications précédentes, caractérisée en ce que le chant (4) est à un niveau supérieur au plan défini par la surface (1) de roulement des billes (2).

8. Installation suivant l'une des revendications précédentes, caractérisée par une paroi (5), qui est parallèle à la paroi (3) à une distance juste supérieure au diamètre des billes et dont le chant est à un niveau inférieur à celui du sommet des billes (2).

9. Installation suivant la revendication 8, caractérisée en ce que le chant de la paroi (3) est conformé en déflecteur (6).

## Claims

1. Apparatus for handling a load (c), comprising a trough (f) for recovering bearing balls (2), which is adjacent a rolling surface (1) on which bearing balls with the same diameter roll freely and which is limited on the one hand by an edge of the surface (1) and on the other hand by a wall (3) the edge (4) of which is at a lower level than the plane joining the tops of the bearing balls (2) which roll on the rolling surface (1), and means (12-22) for returning on the surface (1) bearing balls (2) which fall into the trough (f), characterized in that the trough (f) extends over at least two sides of the rolling surface (1) which forms a table, and there is provided a distributor (8-10) between the ball returning means (12-22).

2. Apparatus according to claim 1, characterized in that the distributor (8-10) is located beneath the table (1)

3. Apparatus according to claim 1 or 2, characterized in that the table (1) is bordered all around by the trough (f)

4. Apparatus according to claim 1, 2 or 3, characterized in that the distributor comprises a pyramid (10) with its apex (9) directed upwards and with the extension of its axis passing through the point at which the diagonals of the table (1) intersect.

5. Apparatus according to claim 4, characterized in that the table (1) is square and there are four ball returning means (12-22) one for each side.

6. Apparatus according to claim 5, characterized in that the ball returning means (12-22) are adjacent the base of the pyramid (10).

7. Apparatus according to one of the preceeding claims, characterized in that the edge (4) is at a higher level than the plane which is defined by the surface (1) on which the bearing balls (2) roll.

8. Apparatus according to one of the preceeding claims, characterized by a wall (5), which is parallel to the wall (3) at a distance just higher than the diameter of the bearing balls and the edge of which is at a lower level than the tops of the bearing balls (2).

9. Apparatus according to claim 8, characterized in that the edge of the wall (3) is formed as a deflector (6).

## Ansprüche

1. Vorrichtung zum Befördern einer Last (c), bestehend aus einem Schacht (f) zur Rückgewinnung von Kugeln (2), der sich an eine Rollfläche (1) anschließt, auf der Kugeln (2) gleichen Durchmessers frei rollen und der anderseits durch eine Kante der Rollfläche (1) und andererseits durch eine Wand (3) begrenzt ist, deren obere Kante (4) unterhalb einer Ebene durch die Scheitel der auf der Rollfläche (1) rollenden Kugeln (2) verläuft, des weiteren bestehend aus Vorrichtungen (12 bis 22) zur Rückführung der in den Schacht (f) gefallenen Kugeln (2) auf die Rollfläche (1), dadurch gekennzeichnet, daß der Schacht (f) sich über mindestens zwei Seiten der einen Tisch bildenden Rollfläche (1) erstreckt, und daß zwischen den Vorrichtungen (12 bis 22) zur Rückführung der in den Schacht gefallenen Kugeln (2) ein Verteiler (8 bis 10) vorgesehen ist.

2. Vorrichtung nach Anspruch 1, dadurch gekennzeichnet, daß der Verteiler (8 bis 10) sich unter dem Tisch (1) befindet.

3. Vorrichtung nach Anspruch 1 oder 2, dadurch gekennzeichnet, daß der Tisch (1) über den gesamten Umfang vom Schacht (f) eingefaßt ist.

4. Vorrichtung nach Anspruch 1, 2 oder 3, dadurch gekennzeichnet, daß der Verteiler eine Pyramide (10) beinhaltet, deren Spitze (9) nach oben weist und deren Verlängerung der Achse durch den Schnittpunkt der Diagnolen des Tisches (1) verläuft.

5. Vorrichtung nach Anspruch 4, dadurch gekennzeichnet, daß der Tisch (1) quadratisch ist und daß vier Rückführungsvorrichtungen (12 bis 22), eine für jede (Tisch-)Kante vorgesehen sind.

6. Vorrichtung nach Anspruch 5, dadurch gekennzeichnet, daß die Rückführungsvorrichtungen (12 bis 22) an die Bodenfläche der Pyramide (10) grenzen.

7. Vorrichtung nach einem der vorhergehenden Ansprüche, dadurch gekennzeichnet, daß die obere Kante (4) sich in einer Höhe oberhalb der Fläche befindet, die durch die Rollfläche (1) der Kugeln (2) definiert ist.

8. Vorrichtung nach einem der vorhergehenden Ansprüche, dadurch gekennzeichnet, daß eine Wand (5) mit einem Abstand, der knapp größer ist als der Kugeldurchmesser, parallel zur Wand (3) angeordnet ist, und daß die obere Kante der Wand (5) in einer Höhe unterhalb der Scheitelhöhe der Kugeln (2) verläuft.

9. Vorrichtung nach Anspruch 8, dadurch gekennzeichnet, daß die obere Kante der Wand (5) als Abweiser (6) ausgebildet ist.

0 012 084

FIG.1

FIG.3

FIG.2